# EUROPÄISCHE PATENTSCHRIFT

(11) **EP 0 893 003 B1**
(45) Veröffentlichungstag und Bekanntmachung des Hinweises auf die Patenterteilung: **03.07.2002**
(21) Anmeldenummer: 97952727.2
(22) Anmeldetag: 15.12.1997
(51) Int. Cl.: H02K 11/00

(54) **ELEKTROMOTOR**
ELECTRIC MOTOR
MOTEUR ELECTRIQUE

(30) Priorität: 17.12.1996 DE 19652589
(43) Veröffentlichungstag der Anmeldung: 27.01.1999
(73) Patentinhaber: ROBERT BOSCH GMBH, 70442 Stuttgart (DE)
(72) Erfinder: WEBER, Matthias, D-76534 Baden-Baden (DE); BERNAUER, Christof, D-76596 Forbach (DE); KNAB, Norbert, D-77767 Appenweier (DE); HAUSSECKER, Walter, D-77830 Bühlertal (DE); VOEHRINGER, Klaus, D-76316 Malsch (DE); RIEHL, Günther, D-77830 Bühlertal (DE); MAIER, Lothar, D-76534 Baden-Baden (DE); DEPTULA, Piotr, D-75428 Illingen (DE)
(86) Internationale Anmeldenummer: DE9702912
(87) Internationale Veröffentlichungsnummer: WO9827640

(56) Entgegenhaltungen:
- EP-A- 0 359 854
- DE-A- 4 123 131
- FR-A- 2 245 950
- FR-A- 2 691 854
- US-A- 5 164 668

## Beschreibung

### Stand der Technik

Die Erfindung betrifft einen Elektromotor nach der Gattung des unabhängigen Anspruchs. Es sind bereits Elektromotoren mit einem an einer Ankerwelle des Elektromotors angeordneten Ringmagneten bekannt. Eine Elektronikplatine, die beispielsweise an dem Motorgehäuseflansch des Elektromagneten befestigt sein kann, trägt Hall-Sensoren, die das Magnetfeld des Ringmagneten aufnehmen und in elektronische Signale umwandeln. Die Hall-Sensoren sind bedrahtet auf der Elektronikplatine eingelötet. Eine Auswerteeinheit wertet die Signale der Hall-Sensoren zur Bestimmung der Umdrehungszahl oder des Drehwinkels der Motorankerwelle aus.

Diese bekannte Anordnung hat den Nachteil, daß die Hall-Sensoren dicht an dem Ringmagneten angeordnet sein müssen. Deshalb muß die Elektronikplatine, die die Hall-Sensoren trägt, ebenfalls dicht an dem Ringmagneten sitzen. Um die Hall-Sensoren vor Fett und Kohlestaub zu schützen, werden sie beispielsweise lackiert. Sie können nur als bedrahtete Bauteile verwendet werden, weshalb die Bestückungszeit hoch ist. Ferner müssen sie, damit ihre Maximalabstände zu dem Magnetrad eingehalten werden, in Haltern angeordnet werden.

Die FR 2 245 950 A1 zeigt einen Elektromotor mit einem Sensor zur Bestimmung der Motorumdrehungszahl einer Ankerwelle des Elektromotors, wobei ein eine elektromagnetische Strahlung abstrahlender Signalgeber ein Signal über eine optische Faser als Signalleitmittel auf den Rotor leitet, wo dieses Signal reflektiert wird, um über eine weitere optische Faser an einen Signalaufnehmer weitergeleitet zu werden. Der Signalgeber, der die elektromagnetische Strahlung abstrahlt, ist am Stator angeordnet.

Die EP 359 854 A1 oder die FR 2 691 854 A1 zeigen jeweils einen Elektromotor mit einem Sensor zur Bestimmung der Motorumdrehungszahl einer Ankerwelle des Elektromotors, wodurch die Sensoren dicht am Signalgeber, einem Ringmagneten, angeordnet sein müssen. Die Signalaufnehmer sind nahe an den Permanentmagneten und dem magnetischen Rückschlusselement angeordnet.

Die US-PS 5,164,668 zeigt einen Magneten als Signalgeber, wobei die Signale über zwei Signalleitmittel an einen Signalaufnehmer weitergeleitet werden. Die Signalleitmittel müssen ungefähr dieselbe Länge aufweisen.

Die DE 41 23 131 A1 zeigt einen Magneten als Signalgeber, wobei die Signale über zwei Signalleitmittel an einen Signalaufnehmer weitergeleitet werden. Der Signalgeber muss zwei symmetrische, geschlossene magnetische Kreise haben, sowie ist eine ferromagnetische Abschirmung notwendig.

### Vorteile der Erfindung

Der erfindungsgemäße Elektromotor mit den Merkmalen des Hauptanspruchs hat den Vorteil, daß die Signalnehmer und Auswerteeinheit zur Auswertung der Signale räumlich entfernt vom Signalgeber angeordnet sein können. Eine mechanische Beeinflussung kann damit weitgehend vermieden werden. Auch elektromagnetische Einwirkungen sind erheblich gemindert, wenn nicht ganz beseitigt.

Durch die in den Unteransprüchen aufgeführten Maßnahmen sind vorteilhafte Weiterbildungen des Elektromotors nach dem Hauptanspruch möglich.

### Zeichnung

In der Zeichnung ist ein Ausführungsbeispiel des erfindungsgemäßen Elektromotors dargestellt und in der nachfolgenden Beschreibung unter Angabe weiterer Vorteile näher erläutert. Es zeigen:
- Fig. 1 einen Kommutator-Elektromotor mit nachgeordnetem Schneckengetriebe;

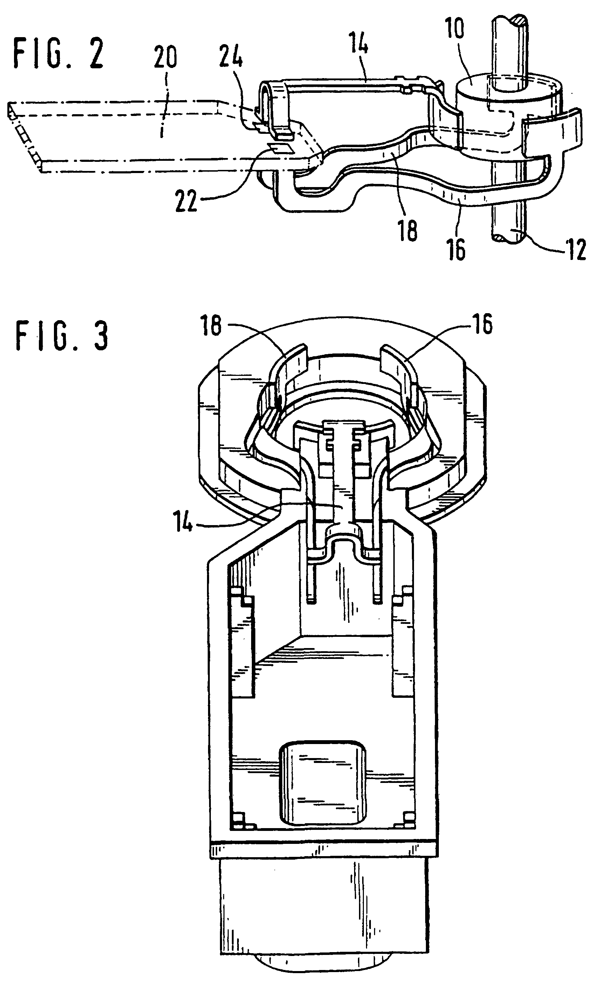

- Fig. 2 eine Prinzipdarstellung der einem Ringmagneten zugeordneten magnetischen Leiter in Schrägansicht;
- Fig. 3 den Einbau der magnetischen Leiter nach Figur 2 in einer Halterung, die in dem elektromotorischen Antrieb der Fig. 1 angeordnet ist;
- Fig. 4a das Magnetfeld der magnetischen Leiter, wobei das Magnetrad ein zweipoliger Permanentmagnet ist
- Fig. 4b, c, d den Betrag der magnetischen Flußdichte an den Punkten 1, 2, und 3 in Fig. 4a
- Fig. 5 den gemessenen Verlauf der magnetischen Flußdichte an einem der SMD-Hall-ICs in Abhängigkeit vom Drehwinkel des Magnetrades in einer Vorrichtung nach Fig. 2.

### Beschreibung

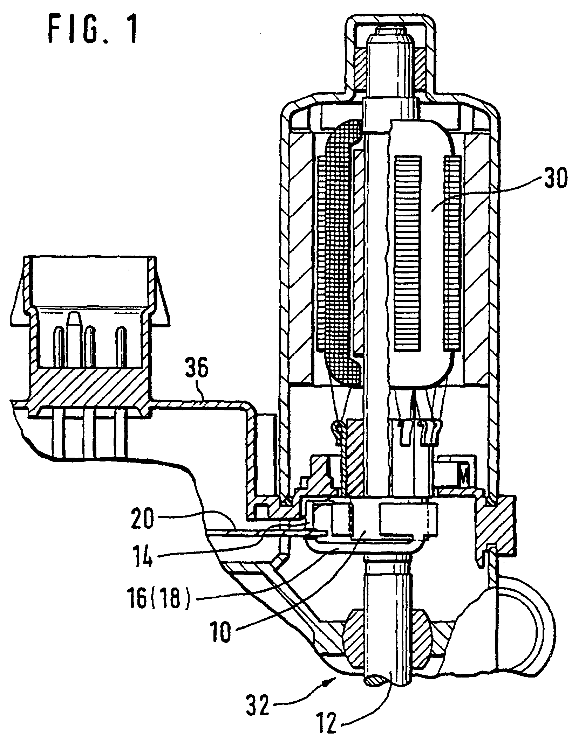

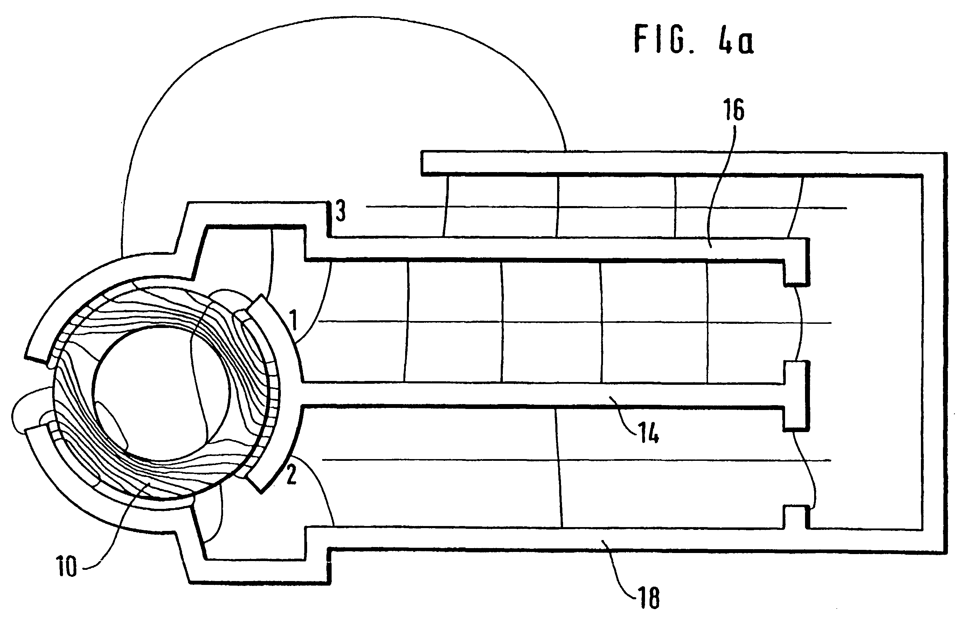

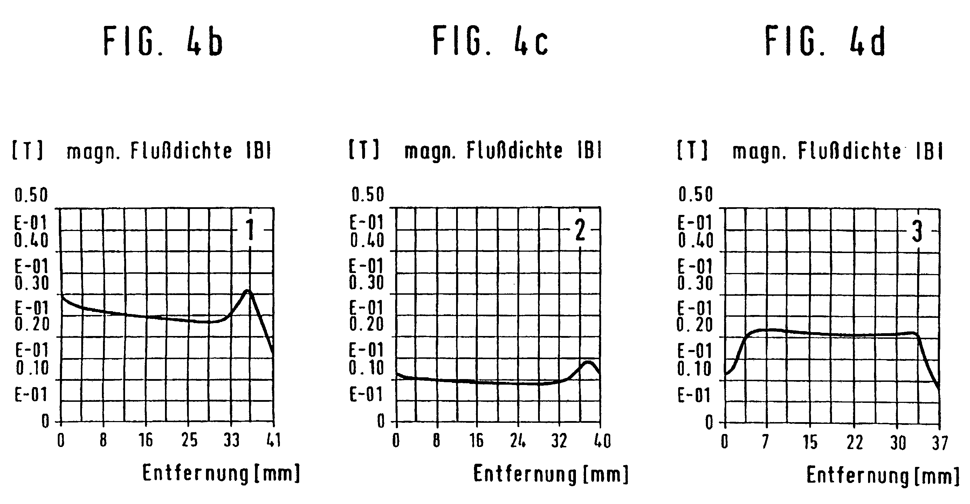

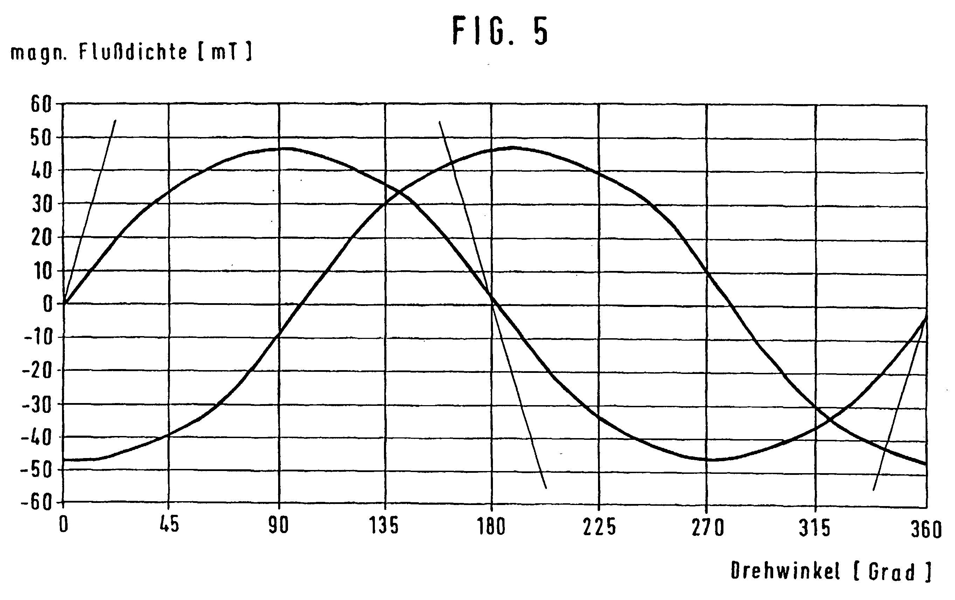

In Figur 1 ist ein Elektromotor 30 mit einem nachgeordnetem Schneckengetriebe 32, einer in das Getriebe verlängerten Motorankerwelle 12, einem Elektronikgehäuse 36 und einer Leiterplatte 20 als Elektronikplatine dargestellt. Dabei ist ein an sich vorbekannter Ringmagnet 10 auf der Ankerwelle 12 des Elektromotors 30 angeordnet. Um den Ringmagneten 10 ist ein unterer Leiter 14 und zwei obere Leiter 16, 18 als Signalleitmittel gelegt. Die Leiter 14, 16 und 18 bestehen aus einem magnetisch leitenden Material, beispielsweise einem Ferromagneten wie Eisen. Vorzugsweise ist das Material weichmagnetisch, also leicht ummagnetisierbar. Die drei Leiter 14, 16 und 18 bilden zwei magnetische Kreise 14-16 und 14-18 und leiten das Magnetfeld des Magnetrades 10 als Signalleitmittel von der Ankerwelle 12 fort. An dem vom Ringmagneten 10 abgewandten Ende der Leiter 14, 16, und 18 befindet sich die Leiterplatte 20, auf der zwei Hall-Sensoren 22, 24 für die beiden magnetischen Kreise 14-16 bzw. 14-18 angeordnet sind. Die Hall-Sensoren 22, 24 sind als SMD-ICs ausgeführt. Sie sind zwischen den oberen Leitern 16, 18 und dem unteren Leiter 14 angebracht. Eine Berechnung der Feldverteilung in den oberen Leitern 16, 18 und dem unteren Leiter 14 bei einer festen Stellung des Ringmagneten 10 ist in der Figur 4a dargestellt. Die Figuren 4b, 4c, und 4d zeigen den Verlauf des Betrags der magnetischen Flußdichte in Abhängigkeit von der Entfernung an den Punkten 1, 2 und 3 in der Figur 4a. Bei einer Drehung des Magnetrades 10 aufgrund einer Betätigung des Elektromotors ändert sich die Magnetisierung in den magnetischen Kreisen 14-16 und 14-18. Durch die magnetischen Leiter 14, 16 und 18 gelangt diese Magnetisierung zu den vom Magnetrad 10 entfernt angeordneten SMD-Hall-ICs. Die magnetische Flußdichte an den SMD-Hall-ICs in Abhängigkeit von der Drehung des Magnetrades 10 ist in der Figur 5 für verschiedene Ausführungen des Magnetrades dargestellt.

Denkbar ist natürlich auch, daß das Magnetrad mehrere Pole aufweist und/oder nur ein oder mehr als zwei magnetische Kreise zur Detektion der Rotation der Motorankerwelle Verwendung finden.

In einer vorteilhaften Ausgestaltung können die Leiter 14, 16 und 18 beispielsweise als einfache Stanzteile ausgeführt sein.

Vorteilhaft wird diese Anordnung in einer Kommutatormotor-Getriebe-Antriebseinheit nach Fig. 1 eingesetzt, die beispielsweise als Stellantrieb für Kraftfahrzeug-Stellteile wie Fenster, Schiebe-Hebedächer, Sitzverstellungen u. a. Verwendung findet.

Die Signale der Hall-ICs können zur Drehzahlerkennung und zur Ermittlung des Drehwinkels der Ankerwelle 12 genutzt werden. Über die Drehzahl des Elektromotors kann wiederum die Verstellstrecke eines von dem Elektromotor angetriebenen Teils bestimmt werden. Darüber hinaus kann eine starke Drehzahländerung erkannt werden. Eine solche Drehzahländerung kann unter bestimmten Voraussetzungen ein Signal für eine Störung sein, wie sie beispielsweise beim Einklemmen eines Gegenstandes durch ein vom Elektromotor angetriebenen Teils vorliegt.

Durch die Anordnung der oberen Leiter 16, 18 unter einem Winkel von 90° kann darüber hinaus die Drehrichtung der Motorankerwelle ermittelt werden.

Vorteile dieser Anordnung:
- Der Einsatz von SMD-Hall-ICs ist möglich. Diese sind automatisiert montierbar und benötigen keine zusätzlichen Hall-Sensor-Halter. Durch die vorbekannte Anordnung ist nur die Verwendung von bedrahteten Sensoren in einem dafür vorgesehenen Halter möglich.
- Es kann Elektronikplatinenplatz eingespart werden, was die Kosten pro Elektronikplatine senkt.
- Es ist eine einfache, rechteckige Elektronikplatine möglich. Die Elektronikplatine muß nicht in das Gehäuse des Elektromotors ragen. Dies reduziert unter anderem den Aufwande beim Trennen der Elektronikplatine.
- Die Elektronikplatine kann von einem separaten, dichten Elektronikgehäuse aufgenommen werden.
- Als Zusatzaufwand werden nur einfache, relativ preisgünstige Teile, insbesondere Biege-Stanzteile notwendig.

Durch den besonderen Aufbau mit den magnetischen Leitern ist eine einfache, automatisierte Montage denkbar. Die oberen Leiter 16, 18 werden dabei in ein Gehäuse des Elektromotors integriert, beispielsweise eingespritzt. Der untere Leiter ist in einem separaten Deckel untergebracht. Damit ergibt sich die folgende Montagefolge:
- Elektronikplatine im Gehäuse montieren
- gegebenenfalls Löten von Steckerverbindungen
- Montieren des Deckels, der beispielsweise dicht verklebt oder ultraschallverschweißt werden kann und somit eine wasserdichte Elektronikeinheit für den Elektromotor ermöglicht.

Ein weiteres, nicht dargestelltes Ausführungsbeispiel der Erfindung sieht vor, daß elektromagnetische Strahlung (Licht) von einem Signalgeber ausgesandt und von einem Signalnehmer, beispielsweise einer Photodiode, ausgewertet wird. Erfindungsgemäß wird die Strahlung vom Signalgeber von einem Signalleitmittel, das beispielsweise eine Glasfaser sein kann, zu dem Signalnehmer geleitet.

## Patentansprüche

1. Elektromotor (30) mit einem Sensor zur Bestimmung der Motorumdrehungszahl und/oder eines Drehwinkels einer Ankerwelle (12) des Elektromotors (30),
bestehend aus
wenigstens einem Signalgeber (10),
der am Anker (12) drehfest befestigt ist,
und wenigstens einem dem Signalgeber (10) zugeordneten Signalaufnehmer (22, 24),
**dadurch gekennzeichnet,**
**dass** zumindest drei Signalleitmittel (14, 16, 18) die Signale des wenigstens einen Signalgebers (10) zu wenigstens zwei Signalaufnehmern (22, 24) leiten.

2. Elektromotor nach Anspruch 1,
**gekennzeichnet durch** einen mehrpoligen Magneten (10) als Signalgeber und einen Magnetfeldsensor (22, 24) als Signalaufnehmer.

3. Elektromotor nach einem der Ansprüche 1 oder 2,
**dadurch gekennzeichnet, daß**
die Signalleitmittel (14, 16, 18) aus magnetisch leitendem Material bestehen.

4. Elektromotor nach einem der Ansprüche 2 oder 3,
**dadurch gekennzeichnet, daß**
der mehrpolige Magnet (10) als Signalgeber drehsteif an der Ankerwelle (12) und der Magnetfeldsensor (22, 24) als Signalaufnehmer an einem Gehäuse oder Gestell des Elektromotors (30) angeordnet ist.

5. Elektromotor nach einem der Ansprüche 2 bis 4, **gekennzeichnet durch** wenigstens einen Hallsensor (22, 24) als Magnetfeldsensor.

6. Elektromotor nach Anspruch 5,
**dadurch gekennzeichnet, daß**
der wenigstens eine Hallsensor (22, 24) als SMD-Bauteil auf einer Elektronikplatine (20) angeordnet ist.

7. Elektromotor nach einem der Ansprüche 4 bis 6, **dadurch gekennzeichnet, daß** die Signalleitmittel (16, 18) mit dem Hallsensor (22, 24) und dem mehrpoligen Magneten (10) wenigstens einen magnetischen Kreis bilden.

8. Elektromotor nach Anspruch 7, **dadurch gekennzeichnet, daß** die Signalleitmittel (14, 16, 18) radial zum Magnet (10) angeordnet sind.

9. Elektromotor nach Anspruch 1, **gekennzeichnet durch** einen elektromagnetische Strahlung emittierenden Signalgeber und einen Detektor für elektromagnetische Strahlung als Signalaufnehmer.

10. Elektromotor nach Anspruch 9, **gekennzeichnet durch** eine lichtleitende Faser als Signalleitmittel.

## Claims

1. Electric motor (30) having a sensor for determining the number of revolutions of the motor and/or an angle of rotation of an armature shaft (12) of the electric motor (30), comprising at least one signal transmitter (10), which is fastened in a manner fixed against rotation on the armature (12), and at least one signal pick-up (22, 24) assigned to the signal transmitter (10)
**characterized**
**in that** at least three signal conducting means (14, 16, 18) conduct the signals of the at least one signal transmitter (10) to at least two signal pick-ups (22, 24).

2. Electric motor according to Claim 1,
**characterized by** a multipole magnet (10) as signal transmitter and a magnetic field sensor (22, 24) as signal pick-up.

3. Electric motor according to either of Claims 1 and 2,
**characterized in that**
the signal conducting means (14, 16, 18) comprise magnetically permeable material.

4. Electric motor according to either of Claims 2 and 3,
**characterized in that**
the multipole magnet (10) as signal transmitter is arranged in a torsionally stiff manner on the armature shaft (12) and the magnetic field sensor (22, 24) as signal pick-up is arranged on a housing or frame of the electric motor (30).

5. Electric motor according to one of Claims 2 to 4,
**characterized by** at least one Hall sensor (22, 24) as magnetic field sensor.

6. Electric motor according to Claim 5,
**characterized in that**
the at least one Hall sensor (22, 24) is arranged as an SMD component on an electronic circuit board (20).

7. Electric motor according to one of Claims 4 to 6, **characterized in that** the signal conducting means (16, 18) form at least one magnetic circuit with the Hall sensor (22, 24) and the multipole magnet (10).

8. Electric motor according to Claim 7, **characterized in that** the signal conducting means (14, 16, 18) are arranged radially with respect to the magnet (10).

9. Electric motor according to Claim 1, **characterized by** a signal transmitter which emits electromagnetic radiation and a detector for electromagnetic radiation as signal pick-up.

10. Electric motor according to Claim 9, **characterized by** a light-guiding fibre as signal conducting means.

## Revendications

1. Moteur électrique (30) comportant un capteur pour déterminer la vitesse de rotation du moteur et/ou l'angle de rotation de l'arbre de l'induit (12) du moteur électrique (30) comprenant
- au moins un générateur de signal (10) fixé solidairement à l'induit (12),
- et au moins un capteur de signal (22, 24) associé au générateur de signal (10),
**caractérisé en ce que**
au moins trois moyens de guidage de signal (14, 16, 18) conduisent les signaux d'au moins un générateur de signal (10) vers au moins deux capteurs de signaux (22, 24).

2. Moteur électrique selon la revendication 1,
**caractérisé par**
un aimant multipolaire (10) comme générateur de signal et un capteur de champ magnétique (22, 24) comme capteur de signal.

3. Moteur électrique selon l'une des revendications 1 ou 2,
**caractérisé en ce que**
les moyens de guidage de signal (14, 16, 18) sont en matière conductrice d'aimantation.

4. Moteur électrique selon l'une des revendications 2 ou 3,
**caractérisé en ce que**
l'aimant multipolaire (10) est fixé comme générateur de signal, solidairement en rotation sur l'arbre d'induit (12) et le capteur de champ magnétique (22, 24) est installé comme un capteur de signal dans le boîtier ou le bâtis du moteur électrique (30).

5. Moteur électrique selon l'une des revendications 2 à 4,
**caractérisé par**
au moins un capteur Hall (22, 24) comme capteur de champ magnétique.

6. Moteur électrique selon la revendication 5,
**caractérisé en ce que**
au moins un capteur Hall (22, 24) est prévu comme composant SMD sur une platine électronique (20).

7. Moteur électrique selon l'une des revendications 4 à 6,
**caractérisé en ce que**
le moyen de guidage de signal (16, 18) forme avec le capteur Hall (22, 24) et l'aimant multipolaire (10) au moins un circuit magnétique.

8. Moteur électrique selon la revendication 7,
**caractérisé en ce que**
le moyen de guidage du signal (14, 16, 18) est disposé radialement par rapport à l'aimant (10).

9. Moteur électrique selon la revendication 1,
**caractérisé par**
un générateur de signal émettant un rayonnement électromagnétique et un capteur de rayonnement électromagnétique.

10. Moteur électrique selon la revendication 9,
**caractérisé en ce que**
le moyen de guidage du signal est une fibre optique.
